# EUROPEAN PATENT APPLICATION

(11) **EP 3 550 282 A1**
(43) Date of publication of application: **09.10.2019**
(21) Application number: 17875861.1
(22) Date of filing: 13.11.2017
(51) Int. Cl.: G01N 15/08, G01F 1/42

(54) **AIR PERMEABILITY MEASURING DEVICE AND SINTERING APPARATUS**

(30) Priority: 02.12.2016 KR 20160163828
(71) Applicant: Posco, Pohang-si, Gyeongsangbuk-do 37859 (KR)
(72) Inventor: PARK, Chong Lyuck, Pohang-si Gyeongsangbuk-do 37695 (KR); KANG, Young Ju, Seoul 06191 (KR)
(74) Representative: Zech, Stefan Markus
(86) International application number: PCT/KR2017/012805
(87) International publication number: WO 2018/101645

(57) **Abstract**

The present invention provides an air permeability measuring device and a sintering apparatus including same, wherein the air permeability measuring device comprises: a plurality of rollers spaced apart from each other in the moving direction of a treated material; a plurality of rotation bodies installed on both side ends of one roller and another roller so as to connect between the one roller and the other roller; a flange installed to seal a top surface of the space that is formed by the plurality of rollers and the plurality of rotation bodies; a hollow duct passing through the flange and extending upward; and a flow velocity sensor mounted to the hollow duct. The air permeability measuring device can continuously and precisely measure the air permeability of the treated material, and the sintering apparatus can continuously and precisely measure the air permeability for each section of a raw material layer.

## Description

### TECHNICAL FIELD

The present disclosure relates to a permeability measuring apparatus and a sintering apparatus. More particularly, the present disclosure relates to a permeability measuring apparatus capable of continuously and precisely measuring a permeability of a treated material. Further, the present disclosure relates to a sintering apparatus capable of uniformly adjusting a permeability of a raw-material layer width-wise uniformly while continuously and accurately measuring section-based permeability of the raw-material layer.

### DESCRIPTION OF RELATED ART

Sintered ore is a blast furnace-charged material produced by using fine iron ore, limestone, powdered coke, and anthracite as raw materials. The sintered ore is charged into the blast furnace together with iron ore and coke during blast furnace operation for molten steel production. The sintered ore production process is the process of sintering fine iron ore and producing sintered ore of a size suitable for blast furnace use. The sintered ore production process involves preparation of mixed raw materials for sintered ore production, and conversion of mixed raw materials into sintered ore.

First, mixed raw materials for sintered ore production are prepared as follows. For example, fine iron ore, limestone, fine coke and anthracite are charged into a mixer. The mixed material is charged into a pelletizer and is humidified to about 7% to 8% of moisture based on the weight or total weight of the mixed material. Then, the mixed material is pseudo-granulated to a particle size of about several millimeters. Thus, the mixed raw material for sintered ore production is prepared.

The conversion of the mixed raw materials into sintered ore is done as follows. While moving the sintering vehicle in the direction of extension of the sintering apparatus, the mixed raw material is vertically segregated based on the particle size and composition and is charged into the sintering vehicle to a predetermined height. Then, the surface of the mixed raw material is ignited to generate the combustion zone. While air in the sintering vehicle is sucked down to move the combustion zone down into a lower portion of the mixed raw material, the mixed raw material is sintered to produce the sintered ore. Thereafter, the sintered ore is crushed and cooled by a crusher and a cooler provided in the sintered ore discharging unit of the sintering apparatus. Then, the crushed or cooled sintered ore is classified to have a particle size of 5 mm to 50 mm, which is suitable for use in the blast furnace. The classified sintered ore is transported to the blast furnace.

The permeability of the mixed raw material (hereinafter referred to as the raw-material layer) charged to the sintering vehicle is a key factor in determining the productivity and quality of the sintered ore. The permeability of the raw material layer should be uniform along the width of the raw material layer while the permeability of the raw material layer is maintained at the desired degree, so that the propagation speed of the flame is uniform in the width direction of the raw material layer. Thus, the sintering reaction proceeds smoothly at all positions in the width direction of the raw-material layer to obtain the sintered ore of good quality.

Therefore, in the sintered ore production, it is necessary to control the process condition including the raw material charging sachem such that the permeability of the raw-material layer is uniform in the width direction of the raw-material layer while controlling the permeability of the raw-material layer to be maintained at a desired value together with measuring the permeability of the raw-material layer.

Conventionally, there is a method of indirectly estimating the permeability of the raw material layer by estimating the position of the flame propagation using the temperature sensor installed at the lower end of the sintering vehicle. In an alternative, a hollow pipe is vertically installed on a top of the sintering vehicle to contact the surface of the raw material layer to measure the internal gas flow rate of the pipe to directly calculate the permeability of the raw material layer. In this way, the permeability of the raw material layer is obtained.

The method using the temperature sensor is an estimation method of the permeability of the raw material layer. Therefore, this method has the resultant value having a large error. Thus, this method may not be used for precisely controlling the charge pattern of the raw material. Further, in the piping based method, since the raw-material layer is sintered while being moved along with the sintering vehicle in the direction of the sintering vehicle, the pipe is irregularly spaced from the surface of the raw-material layer depending on the surface condition of the raw-material layer. Thus, the gas is leaked from the contact surface, resulting in inaccurate results. Therefore, this pipe based method may not be suitable for precisely controlling the charging pattern of the raw material. That is, it was difficult to measure the permeability of the raw material layer in real time at a fixed position on the travel path of the sintering vehicle. Further, it was difficult to precisely measure the permeability in a plurality of sections in the width direction of the raw-material layer.

Further, conventionally, the raw-material layer is vertically segregated and charged based on the particle size and composition using a raw material hopper, a drum feeder and a charge chute installed above the sintering vehicle for the charging of the mixed raw material. In this connection, there is no an independent structure capable of controlling the grain size based segregation in the width direction in real time in response to the widthwise permeability of the raw-material layer. In this connection, the drum feeder and charge chute may control the amount of charge in the width direction of the raw material. However, this control operation is quite different from an operation of controlling the widthwise grain size based segregation of the raw material. Thus, controlling of the grain size based segregation in the width direction in real time response to the widthwise permeability of the raw material layer is not achieved only by the drum feeder and charge chute. That is, conventionally, it has been difficult to control the grain size based segregation in the width direction in real time response to the widthwise permeability of the raw-material layer.

### [Prior Art Document]

### [Patent Literature]

(Patent Document 1) KR10-2004-0051046 A
(Patent Document 2) KR20-1999-0021604 U
(Patent Document 3) KR10-2016-0062288 A
(Patent Document 4) JP1996-182926 A
(Patent Document 5) JP1999-236628 A

### [Non-Patent Document]

(Non-Patent Document 1) F.van Loo et al., Improved Sinter Mix preparation while using challenging materials, METEC & 2nd ESTAD 2015, Dusseldorf, Germany

### DISCLOSURE

### TECHNICAL PURPOSES

The present disclosure is to provide a permeability measuring apparatus capable of continuously and precisely measuring the permeability of a treated material.

The present disclosure is to provide a sintering apparatus capable of continuously and precisely measuring the widthwise-divided section-based permeability of the raw-material layer.

The present disclosure is to provide a sintering apparatus that can adjust the widthwise-divided section-based permeability of the raw-material layer in real time.

The present disclosure is to provide a sintering apparatus that can uniformly control the permeability of the raw-material layer in a widthwise manner.

### TECHNICAL SOLUTIONS

In one aspect, there is provided a permeability measuring apparatus comprising: a plurality of rollers spaced apart from each other in a direction of movement of a treated material and disposed above the treated material; a plurality of rotatable bodies, each rotatable body being mounted on an end of one roller and an end of the other roller to connect the roller to the other roller; a flange installed to seal a top face of a space defined by the plurality of rollers and the plurality of rotatable bodies; a hollow tube extending upwardly from and through the flange; and a flow rate sensor mounted on the hollow tube.

In one embodiment of the permeability measuring apparatus, each rotatable body includes: a plurality of wheels spaced apart from each other in the direction of movement of the treated material and aligned respectively with one roller and the other roller; a belt rotatably mounted on and around the plurality of wheels; and a side plate installed on an inner face of the belt to seal an inner space in the belt.

In one embodiment of the permeability measuring apparatus, the side plate is spaced apart from the plurality of wheels and contacts the inner face of the belt.

In one embodiment of the permeability measuring apparatus, each rotatable body further includes a slit formed concavely in the inner face of the belt, wherein the side plate is inserted into the slit.

In one embodiment of the permeability measuring apparatus, both opposed ends of each of one roller and the other roller are in respective contacts with two adjacent belts, wherein an outer circumferential surface of each of one roller and the other roller is in contact with and is flush with an outer circumferential surface of each of the two adjacent belts.

In one embodiment of the permeability measuring apparatus, the flange contacts, at an periphery of a bottom face thereof, with outer circumferential surfaces of the belts and rollers.

In one embodiment of the permeability measuring apparatus, a first channel is defined to have a space defined between the flange, the plurality of rollers and the plurality of rotatable bodies, wherein the flange, the plurality of rollers and the plurality of rotatable bodies define the top face and side faces of the first channel respectively, wherein a bottom face of the first channel is opened to communicate with the treated material.

In one embodiment of the permeability measuring apparatus, a second channel is defined to an inner space in the hollow tube, wherein the second channel has an outlet communicating with the top face of the first channel.

In one embodiment of the permeability measuring apparatus, the apparatus further includes a support rotatably supporting the plurality of rollers and the plurality of rotatable bodies while passing through the plurality of rollers and the plurality of rotatable bodies in a direction transverse to the direction of movement of the treated material, wherein the support has a lower portion for supporting the plurality of rollers and the plurality of rotatable bodies to be in contact with the treated material, wherein the support has an upper portion connected to the flange or the hollow tube to support the flange so as to be able to contact the plurality of rollers and the plurality of rotatable bodies.

In another aspect, there is provided an sintering apparatus comprising: a vehicle installed to contain a raw material therein, wherein the raw material is treated in the vehicle while the vehicle is traveling; and a permeability measuring apparatus extending across the travel direction of the vehicle and disposed above the vehicle, wherein the permeability measuring apparatus include a roller and a rotatable body, wherein a channel in communication with the raw-material layer treated inside the vehicle is defined by the roller and rotatable body.

In one embodiment of the sintering apparatus, the permeability measuring apparatus includes: a flange installed to face the raw material layer; a hollow tube extending upwardly from and through the flange; and a flow rate sensor mounted on the hollow tube, wherein the roller and rotatable body are installed to contact a periphery of a bottom face of the flange, thereby to form the channel.

In one embodiment of the sintering apparatus, the roller includes a plurality of rollers disposed above the vehicle and spaced apart from each other in the travel direction of the vehicle, wherein the rotatable body includes a plurality of rotatable bodies, wherein each rotatable body is mounted on an end of one roller and an end of the other roller to connect the roller to the other roller, wherein the flange is installed to seal a top face of a space defined by the plurality of rollers and the plurality of rotatable bodies.

In one embodiment of the sintering apparatus, each rotatable body includes: a plurality of wheels spaced apart from each other in the direction of movement of the treated material and aligned respectively with one roller and the other roller; a belt rotatably mounted on and around the plurality of wheels; a slit formed concavely in an inner face of the belt; and a side plate inserted into the slit to seal an inner space in the belt.

In one embodiment of the sintering apparatus, the side plate is spaced apart from the plurality of wheels and contacts the inner face of the belt.

In one embodiment of the sintering apparatus, both opposed ends of each of one roller and the other roller are in respective contacts with two adjacent belts, wherein an outer circumferential surface of each of one roller and the other roller is in contact with and is flush with an outer circumferential surface of each of the two adjacent belts, wherein the flange contacts, at an periphery of a bottom face thereof, with outer circumferential surfaces of the belts and rollers, wherein a first channel is defined to have a space defined between the flange, the plurality of rollers and the plurality of rotatable bodies.

In one embodiment of the sintering apparatus, the flange, the plurality of rollers and the plurality of rotatable bodies define the top face and side faces of the first channel respectively, wherein a bottom face of the first channel is opened to communicate with the treated material, wherein a second channel is defined to an inner space in the hollow tube, wherein the second channel has an outlet communicating with the top face of the first channel.

In one embodiment of the sintering apparatus, the permeability measuring apparatus further includes a support rotatably supporting the plurality of rollers and the plurality of rotatable bodies while passing through the plurality of rollers and the plurality of rotatable bodies in a direction transverse to the direction of movement of the treated material, wherein the support has a lower portion for supporting the plurality of rollers and the plurality of rotatable bodies to be in contact with the treated material, wherein the support has an upper portion connected to the flange or the hollow tube to support the flange so as to be able to contact the plurality of rollers and the plurality of rotatable bodies.

In one embodiment of the sintering apparatus, the permeability measuring apparatus include a plurality of permeability measuring apparatuses respectively arranged in a plurality of sections arranged in a direction transverse to the travel direction of the vehicle, wherein the sintering apparatus further includes: a hopper for charging the raw material into the vehicle; a charger installed to adjust particle-size based segregation of the raw material charged in the hopper in a widthwise manner; and a widthwise charging controller for: receiving measurement values input from the permeability measuring apparatuses; calculating a deviation value between the measurement values; and controlling the charger based on the deviation value.

### TECHNICAL EFFECTS

According to the embodiments of the present disclosure, the permeability measuring apparatus capable of continuously and precisely measuring the permeability of the treated material may be continuously and tightly adhered to the surface of the raw-material layer being treated and moving in the first direction. The permeability measuring apparatus may supply the gas at a far-away spaced location from the surface of the raw-material layer continuously and stably to the surface of the raw-material layer without the structural interference. Thus, the permeability of the raw-material layer may be precisely measured in that the apparatus is continuously measuring the permeability of the raw-material layer in a widthwise-divided section-based manner. In this way, the width-divided section-based permeability of the raw-material layer may be adjusted in real time. In this connection, the permeability of the raw-material layer may be adjusted to be uniform in a widthwise manner.

For example, when the present permeability measuring apparatus is applied to a sintered ore production process in a steel mill, the roller and rotatable body may be used to form the channel in communication with the raw-material layer above the sintering vehicle. Using this channel, the permeability of the raw-material layer can be continuously and precisely measured by the present permeability measuring apparatus while the present permeability measuring apparatus is communicating with the raw-material layer continuing to travel. Further, the permeability of the raw material layer during the sintering is measured precisely in real time at multiple locations on the sintering vehicle. This permeability measuring apparatus may calculate the deviation of the permeabilities of the raw-material layer in the widthwise-divided section-based manner.

Based on the above features, it is possible to design a charging pattern of the raw material for uniform flame propagation. For example, the raw material is charged in a particle-size based segregated manner in a widthwise manner inside the raw material hopper. Thus, the size-based segregation of the raw material in a widthwise manner may be achieved in the sintering vehicle. This allows uniform permeability distribution across all widthwise-divided sections of the raw-material layer during sintering of the raw-material layer. Thus, during sintering of the raw-material layer, uniform flame propagation may be realized in all widthwise-divided sections of the raw-material layer, thereby allowing the sintering reaction to be smooth, and uniformly sintering the raw-material layer without formation of non-sintered portions. As a result, the productivity of the sintered ore can be maximized. The strength deviation of the sintered ore can be reduced. This makes it possible to realize economic benefits.

### BRIEF DESCRIPTION OF THE DRAWINGS

FIG. 1 is a schematic diagram of a sintering apparatus according to an embodiment of the present disclosure.
FIG. 2 is a schematic of a charger according to an embodiment of the present disclosure.
FIG. 3 is a schematic diagram of a permeability measuring apparatus according to an embodiment of the present disclosure.
FIG. 4 is an exploded view of the permeability measuring apparatus according to an embodiment of the present disclosure.
FIG. 5 shows an assembled view of the permeability measuring apparatus according to an embodiment of the present disclosure.
FIG. 6 is a graph comparing permeability measurements according to Comparative Example and Present Example of the present disclosure.
FIG. 7 is a graph comparing measurements of particle-size based segregations of sintered ores according to Comparative Example and Present Example of the present disclosure.

### DETAILED DESCRIPTIONS

Hereinafter, an embodiment of the present disclosure will be described in detail with reference to the accompanying drawings. However, the present disclosure is not limited to the embodiments disclosed below, but may be embodied in various different forms. The embodiment of the present disclosure is merely provided to complete understanding of the present disclosure and to give the person of ordinary knowledge in the field a complete indication of the scope of the invention. To illustrate the embodiment of the present disclosure, the drawings may be exaggerated and the same reference numbers in the drawings designate the same elements.

Among terms used below, a term "first direction (X)" and a term "second direction (Y)" refer to a longitudinal direction and a widthwise direction of a reference component, for example, a vehicle as described later. A vertical direction (Z) refers to a direction perpendicular to a plane defined by both the first direction and the second direction and is also referred to as a height direction. In this connection, the longitudinal direction of the vehicle is parallel to a direction of travel of the vehicle and is also referred to as the travel direction of the vehicle.

The present disclosure relates to a permeability measuring apparatus and a sintering apparatus capable of continuously and precisely measuring the permeability of a raw-material layer moving in a first direction. In the following, the embodiment will be described based on the sintered ore production process of the steelworks. In another example, the present disclosure may be applied to various raw material treatment facilities in various industries and permeability measurement methods in various treatment processes.

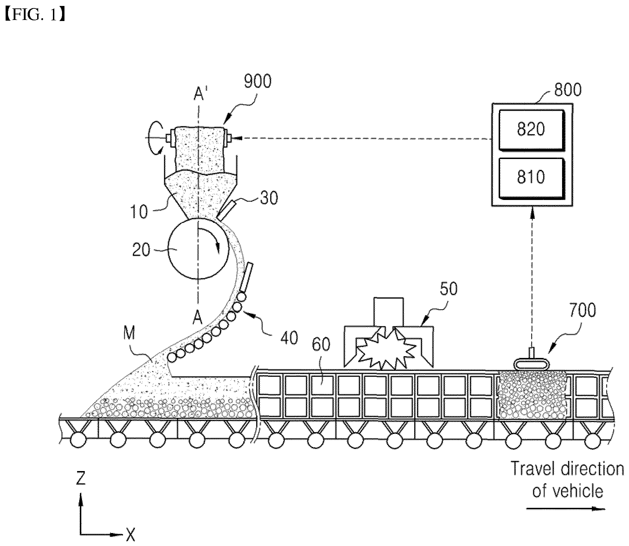

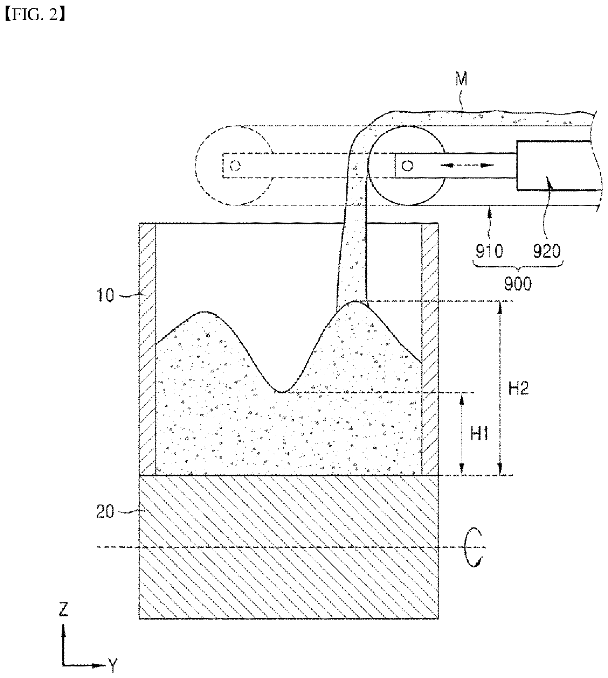

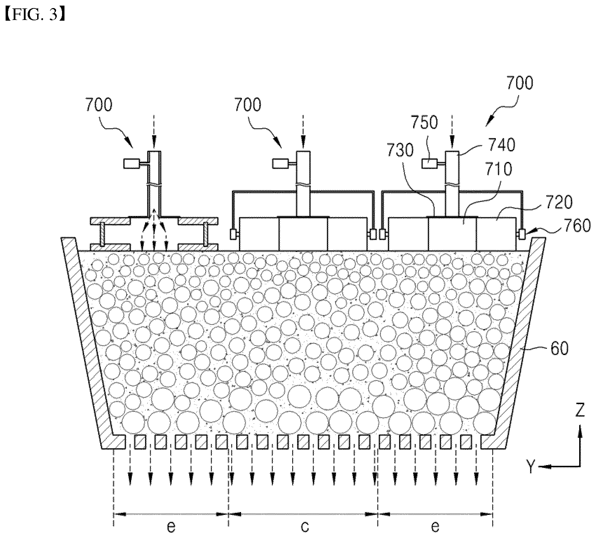

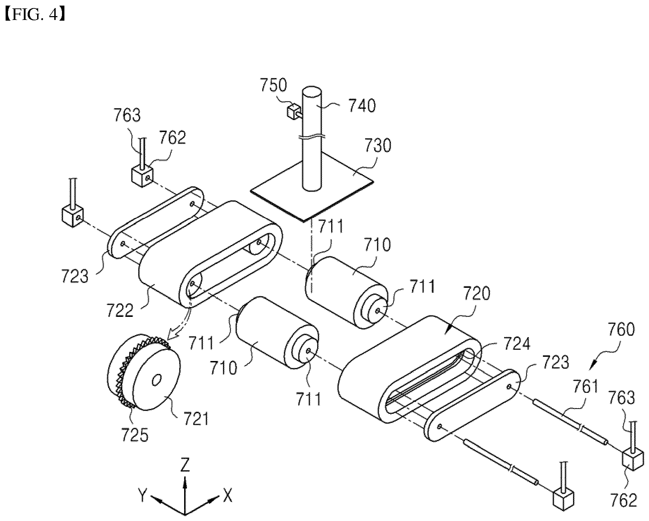

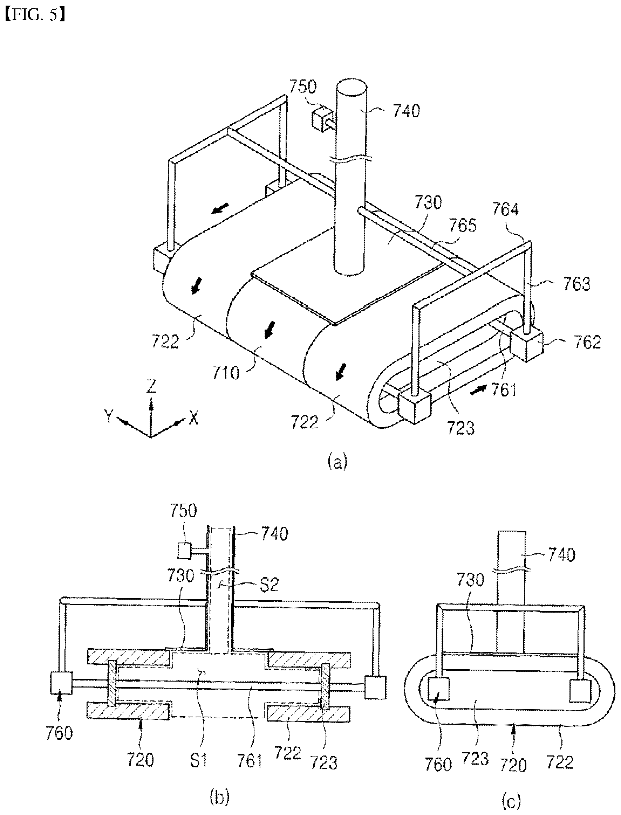

FIG. 1 is a schematic diagram of a sintering apparatus according to an embodiment of the present disclosure. FIG. 2 is a schematic of a charger according to an embodiment of the present disclosure. FIG. 3 is a schematic diagram of a permeability measuring apparatus according to an embodiment of the present disclosure. In this connection, the permeability measuring apparatus located on the left side of FIG. 3 among the permeability measuring apparatuses shown in FIG. 3 is shown such that a schematic shape of a cross section thereof is viewable so that gas flow therein is seen clearly. FIG. 4 is an exploded view of the permeability measuring apparatus according to the embodiment of the present disclosure. FIG. 5 shows an assembled view of the permeability measuring apparatus according to the embodiment of the present disclosure. In this connection, in FIG. 5, (a) refers to a three-dimensional view showing the assembled state of the permeability measuring apparatus according to the embodiment of the present disclosure. In FIG. 5, (b) refers to a schematic cross-sectional view of the permeability measuring apparatus shown in (a) in FIG. 5 in a state in which a middle portion of the permeability measuring apparatus is taken in the second direction (Y) and vertical direction (Z). (c) in FIG. 5 refers to a side schematic view of the permeability measuring apparatus shown in (a) in FIG. 5.

Hereinafter, a permeability measuring apparatus according to an embodiment of the present disclosure will be described with reference to FIGS. 1 to 5. The permeability measuring apparatus 700 according to an embodiment of the present disclosure includes a plurality of rollers 710, a plurality of rotatable bodies 720, a flange 730, a hollow tube 740, and a flow rate sensor 750, and a calculating unit (not shown). The permeability measuring apparatus 700 is installed above the treated material traveling in the first direction X and may continuously and precisely measure the permeability of the treated material while continuously contacting and communicating with the treated material.

The treated material may include, for example, a raw-material layer that is charged to the vehicle 60 of a sintering apparatus described below and travels therein in the vehicle traveling direction and is treated therein. In another example, the treated material may include various treated materials that are being transported along various routes in various ways. The present disclosure is not limited thereto.

Each of the rollers 710 may extend across the direction of movement of the treated material and may be disposed above the treated material. The rollers may be spaced apart from each other in the direction of movement of the treated material. In this connection, the direction of movement of the treated material may be parallel to the direction of the vehicle travel, and is referred to as the first direction X below. The direction across or transverse to the direction of the movement of the treated material may be the direction transverse to the direction of vehicle travel, and may be hereinafter referred to as the second direction Y.

The plurality of rollers 710 may be provided, for example, two rollers 710 may be provided. Hereinafter, when referring to the rollers 710, a preceding roller with respect to the moving direction of the treated material is referred to as one roller, while a trailing roller with respect to the moving direction of the treated material is called the other roller. In this connection, the roller first contacting the moving treated material is called the preceding roller while the roller later contacting the treated material is called the trailing roller.

Each of the rollers 710 is formed to extend in the second direction Y. A cylindrical protrusion 711 may be formed on each of both ends thereof. Each protrusion 711 may be inserted into and attached to the rotatable body 720 to increase the contact surface between the roller 710 and the rotatable body 720. Thereby, the roller 710 and the rotatable body 720 can be stably combined with each other. Further, due to each of the protrusions 711, each roller 710 and the rotatable body 720 may be touched with each other in a curved shape instead of in a planar shape. Thereby, the contact surface may be hermetically sealed while suppressing or preventing the gas from leaking at the contact surface between the roller 710 and the rotatable body 720.

Each roller 710 defines each of both sides in the first direction X of the first channel S1, which will be described later. Thus, each roller 710 is configured such that the extension length in the second direction Y thereof is determined based on the dimension in the second direction Y of the first channel S1, the separation distance in the first direction X between the two rollers is determined based on the dimension in the first direction X of the first channel S1 and the diameter of the roller is determined based on a dimension in the vertical direction Z of the first channel S1. In this connection, the dimension in each direction of the first channel S1 is determined so as to facilitate measurement of the permeability of the treated material. Further, the dimension in each direction of the first channel S1 may be determined according to an area of the raw material layer to be in communication with the permeability measuring apparatus 700 in order to easily measure the permeability of the raw-material layer in the treatment process of the treated material, for example, in the sintered ore production process. Each of the both sides in the first direction X of the first channel S1 may be sealed by each roller 710.

An outer surface of each roller 710 may be in close contact with the treated material. As a result, each roller 710 may be used stably in a high temperature atmosphere and may include various materials that can be smoothly adhered to the irregular and rough surface of the treated material and that may not be limited to a specific material. For example, the roller may be made of a metal material, an alloy material, or a resin material such as urethane or synthetic rubber. In this connection, the high temperature atmosphere is an atmosphere at an temperature at which the treated material is treated. For example, the high temperature atmosphere may be an atmosphere of the temperature at which the sintering of the raw-material layer proceeds in the sintered ore production process. In one example, an outer face of each roller 710 may be covered with the material as described above.

The rotatable bodies 720 may be respectively mounted on both ends of each of one roller and the other roller to realize connection between one roller and the other roller. That is, the rotatable body 720 has a plurality of the rotatable bodies, for example, two rotatable bodies. One of the two rotatable bodies 720 may connect one end of one roller and one end of the other roller with each other. The other rotatable 720 may connect the other end of one roller and the other end of the other roller with each other.

Each rotatable body 720 defines each of the both sides in the second direction Y of the first channel S1. Thus, each rotatable body 720 has an extension length corresponding to the spacing between the rollers 710. The spacing distance between the two bodies 720 corresponds to the extension length of each roller 710. A dimension in the vertical direction Z of each body 720 corresponds to the diameter of each roller 710. Each of the both sides of the first direction X in the first channel S1 can be sealed by each rotatable body 720.

Hereinafter, the detailed structure of the rotatable body 720 will be described with respect to one rotatable body 720. The detailed structure of the rotatable body 720 described below may be applied to the other rotatable body 720.

The rotatable body 720 may include a plurality of wheels 721, for example, two wheels 721, a belt 722, a side plate 723, and a slit 724. Each wheel 721 may extend in the second direction Y. The two wheels may be aligned with one roller and the other roller, respectively and may be spaced from each other in the direction of movement of the treated material. That is, each of the rotatable bodies 720 has a plurality of, for example, two wheels 721. Each roller 710 has a plurality of, e.g., two wheels aligned with each roller. Each roller 710 is aligned, at one end thereof, with one wheel 721, and is aligned, at the other end thereof, with the other wheel 721. The wheels 721 serve to support the rotatable body 720. That is, the belt 722 can be rotatably supported by the wheels 721. An outer circumferential surface of each wheel 721 may be provided with a ring member 725 in the form of a gear, a chain, or a sprocket. In this case, the ring member 721 is inserted into a groove (not shown) defined in an inner surface of the belt 722, so that the belt 722 can be prevented from slipping.

The belt 722 may be mounted to be rotatable and wound around the plurality of wheels 721. The belt 722 may be embodied as a belt used for a caterpillar, a conveyor, or the like, and may have a structure in which an inner circumferential surface and an outer circumferential surface thereof are blocked to prevent leakage of gas. In this connection, the blocked structure means a structure in which the inner circumferential surface and the outer circumferential surface of the belt do not communicate with each other via holes or the like. The material of the belt 722 may include various resin materials such as urethane or synthetic rubber. In another example, the outer surface of the belt 722 may be brought into close contact with the treated material. The inner circumferential surface of the belt may contact the protrusions 711 of the rollers 710 and the side plate 723.

The side plate 723 may be mounted on the inner face of the belt 722 to seal the inner space of the belt 722. The side plate 723 may extend along the inner face of the belt 722. The side plate 723 may be, for example, a vertical plate extending in the first direction X. Both ends of the plate 723 in the first direction X may be semicircular or arcuate in shape. The side plate 723 may be spaced apart from the plurality of wheels 721 in a direction transverse to the direction of movement of the treated material and may be in contact with the inner face of the belt 722.

The slit 724 is recessed in and along the inner face of the belt 722. The side plate 723 is inserted into the slit 724. Thus, the side plate 723 may be stably fixed to the inner face of the belt 722 when the belt 722 rotates.

The above-described rotatable body 720 may be embodied to have, for example, a structure of a caterpillar, wherein each wheel 721 serves as a drive wheel. In this case, the side plate 723 serves as a boggie wheel and skirt, and each roller 710 serves to block an open front and an open rear of a space formed between the rotatable bodies 720. Further, the belt 722, the rollers 710 and the side plate 723 serve to seal the sides in the first direction X and the sides in the second direction Y of the space as described above formed between the rollers 710 and the rotatable bodies 720.

In this connection, each belt 722 and each roller 710 may be formed of a material which can be closely adhered to the rough surface of the treated material as described above. Alternatively, at least an outer skin of the belt and roller is covered with the material closely contacting the rough surface. Thus, leakage of the gas due to the irregular surface of the treated material can be suppressed or prevented.

Further, since each belt 722 and each roller 710 are rotatable while being in contact with the treated material, each belt 722 and each roller 710 may not slip on the surface of the treated material while being in contact with the treated material. Thus, frictional damage of the belt and roller due to the rough surface of the treated material being moved can be suppressed or prevented. In one example, both opposed ends of each of one roller and the other roller are in contact with the opposite belts 722 respectively. Outer faces of each of one roller and the other roller are in contact with the outer faces of the opposite belts 722 respectively. That is, outer faces of each of one roller and the other roller are flush with the outer faces of the opposite belts 722 respectively. Therefore, the contacting between the rollers and belts and the treated material may be smooth.

The flange 730 may be installed to seal the top face of the space formed by the plurality of rollers 710 and the plurality of rotatable bodies 720. The flange 730 may be in the form of a rectangular plate having a predetermined thickness, for example. The flange 730 is positioned to face the space formed between the rollers 710 and rotatable bodies 720. A periphery of the bottom surface of the flange 730 may be in contact with the outer circumferential surfaces of opposing belts 710 and rollers 720. The flange 730 may be further provided with a liner (not shown) lining the periphery of the bottom surface of the flange 730 in contact with the outer circumferential surfaces of opposing belts 710 and rollers 720 so that abrasion of the flange 730 during rotation of the belts 710 and rollers 720 can be prevented.

The first channel S1 may be formed including a space formed between the flange 730, the plurality of rollers 710 and the plurality of rotatable bodies 720. Top and side faces of the first channel S1 may be formed by the flange 730, the plurality of rollers 710 and the plurality of rotatable bodies 720. The lower face of the first channel S1 may be opened to communicate with the surface of the treated material. In this connection, the side edges of the first channel S1 can be sealed by the plurality of rollers 710 and the plurality of rotatable bodies 720. The top surface of the first channel S1 can communicate with the hollow tube 740 through the flange 730.

The hollow tube 740 may be, for example, a hollow tube extending in the vertical direction Z and extending upwardly through the flange 730. The cross-sectional shape of the hollow tube 740 may be circular or rectangular. The hollow tube 740 may be upwardly and vertically spaced from the surface of the treated material. In this connection, the vertical spacing varies with the treatment process of the treated material. For example, when the treatment process is a sintered ore production process, the hollow tube 740 may extend to a predetermined height (about several tens to several hundreds cm) to have little or no interference from the air flow resulting from the vehicle travel. This height may vary depending on the various process conditions such as the suction force of the wind box to smoothly sinter the raw-material layer in the sintered ore production process and the travel speed of the vehicle, and types of the atmosphere around the vehicle.

The second channel S2 is formed including the interior space of the hollow tube 740. An outlet of the second channel S2 may communicate with the top face of the first channel S1. A gas channel is formed including the first channel S1 and second channel S2. The gas channel communicates with the treated material. The gas channel may communicate with the treated material without a structural interference while the permeability measuring apparatus 700 is traveling relative to the treated material. Through the gas channel, the gas above the treated ma can smoothly reach the treated material without a structural interference, and may be sucked into the treated material. In this connection, the permeability of the treated material can be accurately measured in real time by measuring the gas flow with the flow rate sensor 750.

That is, the gas at a position spaced upwardly from the treated material is sucked into the hollow tube 740 and flows through the second channel S2, and then through the first channel S1 surrounded by the flange 730, the rollers 710 and the rotatable bodies 720 and then reaches the surface of the treated material. Then, the gas from the surface of the treated material is sucked downwardly into the treated material by the downward suction force applied to the treated material. In this connection, the flow of gas is caused by the suction force applied downwardly into the treated material. In one example, the flow rate of the gas flowing through the gas channel differs depending on the degree to which the gas is sucked, which depends on the permeability of the treated material.

The flow rate sensor 750 is mounted on the hollow tube 740 to measure the flow rate of the gas flowing through the hollow tube 740. For this purpose, the flow rate sensor 750 may be a variety of sensors capable of measuring the flow rate of gas flowing through the hollow tube 740. The flow rate sensor 750 may be mounted to pass through a portion of the tube 740 spaced apart from the top of the hollow tube 740. In one example, the sensor 750 may be mounted closer to the bottom of the hollow tube 740 than to the top of the hollow tube 740.

When the flow rate sensor 750 is mounted near the bottom of the hollow tube 740 than to the top thereof, the flow rate of the gas can be measured in a state when the gas flow in the hollow tube 740 is more stabilized.

The calculating unit (not shown) receives the flow rate value from the flow rate sensor 750 and calculates the permeability of the treated material. In this connection, the permeability value is a dimensionless value, which may be expressed as JPU. In this connection, JPU is the abbreviation of Japanese permeability unit. A method of calculating the permeability using the flow rate value in the gas channel is briefly described below.

For example, a thickness value [mm] in the vertical direction Z of the treated material is denominator. The downward suction pressure applied to the treated material (for example, a negative pressure value [mmAq]) is numerator. Then, (the numerator/denominator)^{0/6} is called a first value. Further, the flow amount value [m³/min] of the gas obtained by multiplying the flow rate value by the cross-sectional area of the second channel S2 is defined as a denominator. Then, the surface area of the treated material communicating with the first channel S1, for example, the firing area [m²] is defined as numerator. Then, the numerator/denominator is called a second value. The permeability value [JPU] may be obtained by multiplying the first value by the second value.

In this connection, the thickness of the treated material, the negative pressure applied to the treated material, the cross-sectional area of the second channel S2, and the firing area are the values obtained from the treatment process and device. The flow rate value is the value measured in real time from the permeability measuring apparatus. Thus, in the embodiment of the present disclosure, the permeability value may be measured continuously in real time. In another example, the permeability of the treated material may be determined from the flow rate value measured at the flow rate sensor 750 in a variety of ways.

In one example, the permeability measuring apparatus 700 according to an embodiment of the present disclosure may further include a support 760. The support 760 may pass through the plurality of rollers 710 and the plurality of rotatable bodies 720 in a direction transverse to the direction of movement of the treated material to rotatably support the plurality of rollers 710 and the plurality of rotatable bodies 720.

The support 760 includes a plurality of support bars 761 extending in the second direction Y and spaced from each other in the first direction X and aligned with one roller and the other roller, respectively, and passing through the rollers 710 and the rotatable bodies 720 in the second direction Y for rotatably supporting the rollers 710 and the rotatable bodies 720. The support 760 further includes a support block 762 mounted on each of both side ends of each of the support bars 761, a vertical bar 763 extending upward from each of the support blocks 762, a first direction-extending horizontal bar 764 for connecting top ends of the vertical bars 763 and extending in the first direction X, and a second direction-extending horizontal bar 765 for connecting each of the first direction-extending horizontal bars 764 and the hollow tube 740 and extending in the second direction. In this connection, the second direction-extending horizontal bar 765 may be connected and disposed between the hollow tube 740 and each of the first direction-extending horizontal bars 764.

This support structure allows the bottom of the support 760 to support the rollers 710 and the rotatable body 720 in contact with the treated material, while the top of the support 760 is connected to the flange 730 or the hollow tube 740 to support the flange 730 so that the rollers 710 and the rotatable bodies 720 can contact the flange 730. The support 760 may allow the coupling between the rollers 710 and the rotatable bodies 720 to be stably maintained. Further, the support may allow the vertical level of the flange 730 relative to the rollers 710 and the rotatable bodies 720 to be maintained so that the contact of the flange 730 with the rollers 710 and the rotatable bodies 720 may be maintained.

In another example, the structure of the support 760 may vary. The variation may include various structures by which the rollers 710 and rotatable bodies 720 are rotatably supported in contact with the treated material, and the flange 730 is supported in contact with the rollers 710 and the rotatable bodies 720.

Hereinafter, a sintering apparatus according to an embodiment of the present disclosure will be described. A sintering apparatus according to an embodiment of the present disclosure includes a vehicle 60 mounted to be able to treat a raw material M while traveling in a first direction, and the permeability measuring apparatus 700 installed above the vehicle 60 and extending across the travel direction the vehicle 60. The permeability measuring apparatus 700 has the rollers and the rotatable bodies defining the gas channel in communication with the raw-material layer being treated inside the vehicle 60. In this connection, the phase "above the vehicle 60" refers to "on a top surface of the raw-material layer charged to the vehicle 60". In one example, the sintering apparatus according to an embodiment of the present disclosure may include a hopper 10, a feeder 20, a gate 30, a chute 40, and an ignition device 50, a widthwise charging controller 800 and a charger 900.

The raw material M includes mixed raw material for sintered ore production. The mixed raw material is prepared by mixing iron-containing raw materials, binders and secondary raw materials, and then moisturizing the mixed material and pulverizing the mixed material. The iron-containing raw material includes fine iron ore and coarse iron ore. The binder includes fine coke and anthracite, and the secondary raw material includes limestone or quicklime. Additives for controlling basicity, for example, may be added to the mixed raw materials.

The hopper 10 stores the raw material M therein. The hopper may be disposed above the transport path to be described later and face the vehicle traveling along the transport path. The hopper may charge the raw material M into the vehicle 60. The feeder 20 is rotatably coupled to the hopper 10 at the bottom thereof. The chute 40 is installed in an inclined manner below the feeder 20. The gate 30 is installed between the feeder 20 and the hopper 10.

The feeder 20 and chute 40 guide the drop and charge of the raw material M between the hopper 10 and vehicle 60. While the feeder 20 adjusts the number of revolutions, the gate 30 controls the opening of the hopper 10 to control the supply of the raw material M. The chute 40 may charge the raw material M in an inclined manner to allow the raw material to be charged in the vertically segregated manner. The particle-size based segregation and component based segregation in the vertical direction Z can increase the recovery and intensity of the sintered ore at the surface of the raw-material layer and can reduce the amount of the binder (coal and fine coke) contained in the raw material M used as fuel.

In one example, when the particle-size based segregation of the raw-material layer is uniform in a widthwise manner, the permeability is formed nonuniformly in a widthwise manner. Thus, the propagation speed of the flame varies in the widthwise manner of the raw-material layer, resulting in insufficient sintering in some regions of the raw-material layer. This leads to the productivity of the sintered ore. The uniform propagation of the flame in the widthwise direction of the raw-material layer is desirable for improving the quality and productivity of the sintered ore.

Therefore, when charging the raw material to the vehicle 60, it is preferable to charge the raw material such that the particle-size based segregation varies in a widthwise manner. Specifically, it may be preferable to control the particle-size based segregation in a widthwise manner such that a raw material of a relatively large particle-size is charged into the middle section c among the plurality of widthwise-divided sections, and the raw material of the smaller particle-size is charged into both outer sections e around the middle section c.

However, it is difficult to control the particle-size based segregation of the raw-material layer in a widthwise manner using the above approach alone. Thus, according to the present disclosure, the widthwise charging-controller 800 and the charger 900 may be used to control the particle-size based segregation of the raw-material layer in the widthwise manner. In this connection, a reference value for adjusting the particle-size based segregation of the raw-material layer in the widthwise manner may employ a permeability value in each widthwise-divided section of the raw-material layer measured by the permeability measuring apparatus 700. The specific way to control the particle-size based segregation of the raw-material layer in the widthwise manner is described in a following detailed description of the widthwise charging controller 800 and charger 900.

At each of a plurality of positions separated in the second direction and the vertical direction in the beginning region of the transport path, a ventilation bar (not shown) may be installed in the first direction X. The venting bar is installed in the drop zone of the raw material M from the chute 40 and is disposed across the interior of the traveling vehicle 60 in the first direction X. When the vehicle 60 moves in the forward direction and the ventilation bars inserted in the raw-material layer in the vehicle 60 are removed from the raw-material layer, a plurality of voids can be formed in the areas inside the raw-material layer where the ventilation bar was located.

An upper ore hopper (not shown) is placed at one position on the transport path prior to hopper 10. The upper ore may be prepared by selecting sintered ore having a particle size of 8 to 15 mm, for example, from a previously produced sintered ore. The upper ore is charged to the vehicle 60 before the raw material M is charged, thereby to prevent the raw material from adhering to the bottom of the vehicle 60 or the raw material from being lost through a bottom clearance.

The ignition device 50 is spaced from the hopper 10 in the first direction and is disposed above the vehicle 60. Flame can be injected from the device 50 into the raw-material layer. The ignition device 50 is capable of jetting a flame downwardly to the transfer path to ignite the flame on the surface of the raw-material layer. The flame ignites the solid fuel contained in the raw-material layer to form the combustion zone. The combustion zone may be moved downwardly in the raw-material layer to sinter the raw-material layer.

A plurality of wind boxes (not shown) may be provided below the conveying path and may be continuously arranged in one direction. The wind box may communicate with the interior of the vehicle 60. A negative pressure can be formed into the vehicle by the wind box such that the interior of the vehicle 60 may be sucked downward.

The wind box is installed on the lower side of the vehicle 60 so as to surround the lower portion of the vehicle 60, and a plurality of wind boxes can be arranged in one direction in the travel direction of the vehicle 60. The wind box communicates with the interior of the vehicle 60 through the bottom surface of the vehicle 60. A negative pressure is formed inside the vehicle 60 by an exhaust unit (not shown), such that the inside of the vehicle 60 can be sucked downward using the negative pressure. This suction force allows the combustion zone to move from a surface of the raw-material layer through an upper portion to a lower portion thereof to sinter the raw material.

The exhaust unit (not shown) may communicate with the inside of the wind boxes to draw in the exhausted gas. The exhaust unit includes a main chamber and a plurality of pipes upstream of the main chamber for connecting the wind boxes. The exhaust unit may further include a dust collector and a blower mounted downstream of the main chamber.

The blower may form a negative pressure in the main chamber so that the exhausted gas flows from the upstream side to the downstream side of the main chamber. The exhausted gas led to the downstream side of the main chamber is discharged to the outside air. In one example, a hood (not shown) may be provided above the travel path and spaced from the ignition device 50 in the first direction. The hood can be supplied with a portion of the exhausted gas from the exhaust chamber to circulate the exhausted gas to the travel path.

The vehicle 60 may be installed to treat raw material M while traveling in the first direction of the travel path. A plurality of vehicles 60 may be provided and may be arranged in the first direction and may be coupled to each other. The vehicle 60 travels along the travel path and may be installed to treat the charged raw material M therein. In this connection, the first direction may be the direction in which the sintering apparatus extends. The first direction may be referred to as the travel direction of the vehicle 60 traveling along the travel path.

The vehicle 60 is opened upwardly, and the raw material M is dropped into the space therein to form the raw-material layer. The vehicle 60 is provided in a structure in which a floor can be ventilated. For example, the floor may be formed using grating bars having a grating structure. The grill-shaped grating bar allows the inner space of the vehicle 60 to communicate with the wind box such that the inside of the vehicle 60 may be sucked downward. This allows thermal treatment of the raw-material layer loaded in the interior space of the vehicle 60. The inner space of the vehicle 60 may be used as a space for heat-treating the raw-material layer therein. The raw-material layer may be sintered and cooled while traveling along the travel path.

The plurality of vehicles 60 may be movably supported in the first direction on a conveyor extending in the first direction. The plurality of vehicles 60 may be combined with each other in an endless manner to form a forward path while traveling on and along a top face of the conveyor. A return path may be formed while the vehicle 60 is traveling on a bottom face of the conveyor. The vehicle 60 travels the travel path in the first direction to heat-treat, e.g., sinter, the raw-material layer. When the vehicle 60 returns to an end point of the forward path (turn-around point), the raw material layer is ejected out. Then, the vehicle 60 travels along the return path in the direction opposite to the first direction. Then, the vehicle may turn around an end point where the return path ends.

The travel path includes a plurality of sections. The plurality of sections includes a charge section, an ignition section connected to the charge section, and a sintering section connected to the ignition section while the ignition section is interposed between the charge section and sintering section. The plurality of sections includes a series combination of the charge section, the ignition section and the sintering section in this order in a direction in which the vehicle travels in the direction of travel of the raw material. The charge section is provided on a start portion of the travel path, that is, on an upstream side of the travel path with respect to the direction of movement of the raw material. The raw material first passes by the charge section. The ignition section is connected to the downstream side of the charge section following the charge section, and, then, the sintering section is connected to the downstream side of the ignition section following the ignition section.

The hopper 10 is placed in the charge section to load the raw material into vehicle 60 traveling through this section. The ignition device 50 is placed in the ignition section to ignite the raw-material layer loaded on the vehicle 60 traveling through this section. The sintering section is a section for sintering the raw-material layerw while moving the combustion zone formed on the surface of the raw-material layer loaded on the vehicle 60 to a lower portion of the raw-material layer. The raw-material layer is sintered while traveling in the first direction, thereby producing the sintered ore.

A ore discharge chute may be installed nearby an end point (the downstream side of the sintering zone of the travel path) where the plurality of sections end. When the vehicle 60 passes a point in the sintering section and the combustion zone reaches the bottom of the vehicle 60, the sintering of the raw-material layer is completed. The vehicle 60 is then moved to an end point of the travel path and the sintered ore is cooled. That is, the point at which sintering of the raw-material layer is completed may be the end point of the travel path. Thereafter, the sintered ore may be discharged to the chute (not shown) at the end point of the travel path (the end point at which the plurality of sections as described below end).

A crusher (not shown) may be provided at a position spaced from an end point of the sintering section and opposite to a start point of the sintering section adjacent to the ignition section. The discharge chute (not shown) is installed to travel between the crusher and the end point of the travel path and to connect to between the vehicles turning around at the end point of the forward travel path. The crusher may be formed to crush the raw-material layer discharged from the vehicle into a predetermined particle-size. The sintered ore, which has been crushed into the predetermined particle size in the crusher is guided to a predetermined chute and charged to the cooler.

A cooling unit (not shown) may be embodied as, for example, an air-based cooling unit. For example, while a cooling vehicle may be circulated in an annular cooling path, air is blown into the cooling vehicle to cool the sintered ore charged inside the cooling vehicle. The cooled sintered ore in the cooling unit may be transferred to the blast furnace process.

The components of the sintering apparatus such as the hopper 10, the feeder 20, the gate 30, the chute 40, the ignition device 50, the vehicle 60, the wind box, the exhaust unit, the crusher, the discharge chute, and the cooling unit may have various configurations other than the above defined configurations. Thus, the configurations thereof are not particularly limited.

The permeability measuring apparatus 700 is installed in each of the plurality of sections and extends in the direction transverse to the travel direction of the vehicle. The permeability resulting from the widthwise particle-size based segregation of the raw-material layer may be continuously measured in each section by the permeability measuring apparatus 700. In this connection, the plurality of sections are arranged in the width direction of the raw-material layer. The plurality of sections may be defined by positioning a plurality of boundary lines extending in the longitudinal direction and spaced in the widthwise manner on the top face and the bottom face of the raw material layer, and by connecting the boundary lines in a vertical direction to form a plurality of planes defining the plurality of sections formed on the vehicle 60.

Each of the plurality of sections extends in the longitudinal direction. The plurality of sections may be listed in a widthwise manner. In an embodiment of the present disclosure, the plurality of sections are illustrated to correspond to a middle section c and both outer section e around the middle section c. In an embodiment of the present disclosure, the permeability measuring apparatus 700 may be used to continuously and precisely measure the section-based permeability of the raw-material layer, that is, the permeability of the raw-material layer in each section. Since the permeability measuring apparatus 700 has been described in detail above, the connection relationships between the components of the permeability measuring apparatus 700 will be briefly described below.

The permeability measuring apparatus 700 includes the plurality of spaced apart rollers 710 disposed above the vehicle 60; the plurality of rotatable bodies 720, each body 720 installed on an end of one roller and an end of the other roller to connect one roller to the other roller; the flange 730 installed to face the raw-material layer, an bottom outer periphery of the flange 730 contacting the rollers 710 and rotatable bodies 720; the hollow tube 940 extending upwardly through and from the flange 730; the flow rate sensor 750 mounted on the hollow tube 940; and the calculating unit (not shown) connected to the flow rate sensor 950. Further, the permeability measuring apparatus 700 may include the support 760 that rotatably supports the plurality of rollers 710 and the plurality of rotatable bodies 720 while passing through the plurality of rollers 710 and the plurality of rotatable bodies 720 in a direction transverse to the travel direction of the vehicle.

The rollers 710 and rotatable bodies 720 may defined the first channel that communicate to the raw-material layer. The flange 930 may be installed to seal the top face of the space described above defined by the rollers 710 and rotatable bodies 720.

The rotatable body 920 includes the plurality of wheels 721 spaced apart from one another in the travel direction of the vehicle and are aligned with one roller and the other roller respectively, the belt 722 rotatably mounted around the plurality of wheels 721, the slit 724 recessed in the inner face of the belt 722, and the side plate 723 which is spaced apart from the plurality of wheels 721 and contacts the inner face of the belt 722 and is inserted into the slit 724 to seal the inner space of the belt 722.

One end of the one roller and one end of the other roller are in contact with the belt 722. Each outer circumferential surface of one roller and the other roller is in contact with each belt 722 and is flush with the outer face of the belt. The bottom outer periphery of the flange 730 is in contact with the outer circumferential surfaces of the belts 722 and rollers 710.

The first channel S1 may be formed including the space formed between the plurality of rollers 710 and the plurality of rotatable bodies 720. The top and side faces of the first channel S1 are defined by the flange 730, the plurality of rollers 710 and the plurality of rotatable bodies 720. The bottom face of the first channel is opened to communicate with the raw-material layer. The second channel S2 including the interior of the hollow tube 730 is formed. The outlet of the second channel S2 may communicate with the top face of the first channel S1.

A lower portion of the support 760 supports the plurality of rollers 710 and the plurality of rotatable bodies 720 in a contactable manner to the raw-material layer. An upper portion of the support 760 may be connected to the hollow tube 740 to support the flange 730 in contact with the plurality of rollers 710 and the plurality of rotatable bodies 720.

The flow rate sensor 750 may measure the flow rate of gas through the interior of the hollow tube 740. The calculating unit may calculate the permeability of the raw-material layer using the flow rate value measured from the flow rate sensor 750.

The operation of the permeability measuring apparatus 700 formed as described above will be described. When the raw-material layer travels along the travel path at a speed of several m/s while contained in the vehicle 60, the rollers 710s and rotatable bodies 720 may rotate in contact with the raw-material layer to maintain a close contact with the raw-material layer. As a result, the side faces of the first channel S1 are smoothly sealed, and the bottom face of the first channel S1 is continuously communicated with the raw-material layer. Since a gas in the raw-material layer is sucked downwardly, a gas in the first channel S1 is sucked downwardly into the raw-material layer. The gas at a position vertically spaced from the surface of the raw-material layer may be continuously and steadily guided through the second channel S2 in communication with the first channel S1 to the surface of the raw-material layer.

That is, the channels in the permeability measuring apparatus 700 may be communicated to the raw-material layer while the rollers and rotatable bodies closely contact the surface of the traveling raw-material layer. In this connection, damage of the rollers and rotatable bodies due to friction with the rough surface of the raw-material layer may be suppressed or prevented. Leakage of the gas through a gap between the rollers and bodied and the rough surface of the raw-material layer may be suppressed or prevented. That is, the durability and airtightness of the permeability measuring apparatus 700 may be improved during the operation thereof. The flow rate sensor 740 measures the flow rate of the gas flowing through the second channel S2, and, then, the calculating unit accurately calculates the permeability using the measured value. That is, the accuracy of the measurement may be improved in operating the permeability measuring apparatus 700.

The same procedure may be repeated for each of the permeability measuring apparatuses 700 arranged in the width direction, thereby to calculate the widthwise-divided section-based permeability in real time. The permeability of the raw-material layer calculated based on the widthwise-divided sections may be used to control the widthwise particle-size based segregation of the raw-material layer. Further, the permeability value may be used to calculate porosity due to widthwise particle-size deviation of the raw-material layer.

Hereinafter, prior to descriptions of a specific method for controlling the widthwise particle-size based segregation of the raw-material layer, and the widthwise charging controller 800 and charger 900 applied thereto, why adjusting of the widthwise particle-size based segregation of the raw-material layer is required will be described.

When the widthwise charged density and particle-size based segregation of the raw-material layer are uniformly formed in the width direction, a pore in a portion of the raw-material layer (referring to a portion of the raw-material layer located in the widthwise-outer section e) in contact with a side wall at each of both side edges of the vehicle 60 (referring to a side wall extending in the first direction) is larger than a pore of a remaining portion of the raw material layer (a portion of the raw-material layer located in the widthwise middle section c).This is because in each of both widthwise outer sections e, the pore formation in the raw-material layer is influenced by the side wall of vehicle 60. That is, a gap between the raw material M and the side wall of the vehicle 60 is a factor that increases the porosity in the raw-material layer in each of both widthwise outer sections e.

In this case, the flow rate of the gas drawn in the raw-material layer in the widthwise middle section c is relatively small, while the flow rate of the gas passing through the raw-material layer in each of both widthwise outer sections e is relatively large. When the difference in the flow rate exceeds a certain value, the thermal energy required for sintering the raw material (also called pseudo-particles) cannot be sufficiently supplied to the raw-material layer charged to each of both widthwise outer sections e. In each of both widthwise outer sections e, the raw-material layer is incompletely sintered. Thus, the sintered ore recovery rate for the raw-material layer charged in each of both widthwise outer sections e decreases, and the strength of the sintered ore is lowered.

Therefore, in order to improve the recovery rate and strength of the sintered ore, the permeabilities are measured in the widthwise-divided sections of the raw-material layer in real time, and the widthwise particle-size based segregation of the raw-material layer is adjusted to reduce a deviation between the permeabilities as measured.

In an embodiment of the present disclosure, after the widthwise charging controller 800 receives the permeability values measured by the permeability measuring apparatuses 700 as described above, and controls the charger 800 using the received values. In this way, the particle-size may be segregated differently between the widthwise-divided sections so that the porosities are uniform in a widthwise manner of the raw-material layer. As a result, the flame propagation speed becomes uniform in a widthwise manner of the raw-material layer, and the recovery rate of the sintered ore may be improved and a deviation in strengths of the sintered ores may be reduced.

Hereinafter, a specific method for controlling the widthwise particle-size based segregation of the raw-material layer will be described together with the description of the widthwise charging controller 800 and the charger 900.

The widthwise charging controller 800 may include a calculating unit 810 and a controller 820. The calculating unit 810 may receive the measured values from the permeability measuring apparatuses and calculate a deviation value between the measured permeability values. In this connection, in one embodiment of the present disclosure, the deviation value may be calculated by comparing the permeability values in the both outer sections e with the permeability value in the widthwise middle section c among the plurality of sections. In another example, the deviation value may be obtained in a variety of ways. A plurality of deviation values may be obtained according to the number of the sections. The deviation value may be passed to the controller 820. Then, the controller 820 determines the difference between the flow rates in the widthwise middle section c and the both outer sections e using the deviation value as inputted. The controller may control the widthwise charging controller such that the raw material with the large particle-size is charged in a section with a low flow rate among the widthwise middle section c and both outer sections e, while the raw material with the small particle-size is charged to a high flow rate section among the widthwise middle section c and both outer sections e. Thus, the widthwise particle-size based segregation of the raw-material layer as charged to the vehicle 60 by the charger 900 may be adjusted.

That is, in an embodiment of the present disclosure, when the raw material M is dropped onto the vehicle 60, the particle-size of the raw material M is segregated in a widthwise manner such that while the raw material is subjected to the vertical segregating based on the particle-size, the raw material is injected into the vehicle. This may be done by the charger 900. The charger 900 may be installed to adjust the particle-size based segregation of the raw material M charged in the hopper 10 in a widthwise manner.

The charger 900 may be referred to as a shuttle conveyor, for example. The charger 900 may include a conveyor 910 capable of conveying the raw material M, and a reciprocator 920 capable of reciprocating a downstream end of the conveyor 910 in the second direction Y (e.g., in the widthwise manner). In this connection, a structure of the reciprocator 920 is not particularly limited and may be a structure by which the downstream end of the conveyor 910 may move back and forth in the widthwise manner. For example, the structure of the reciprocator has a cylinder structure.

The charger 900 is installed such that a downstream end of the conveyor 910 is positioned above an inlet opening of the hopper 10 and an upstream end of the conveyor 910 receives the raw material M which is conveyed to the downstream end thereof. Thereafter, the raw material M is dropped and charged on the hopper 10.

The downstream end of the conveyor 910 charges the raw material M inside the hopper 10 while reciprocating via the reciprocator 920 in a widthwise manner. As shown in FIG. 2, the raw material M may be charged so that the widthwise middle section may has a valley with a concave shape, and each of both widthwise outer sections forms a convex shape. In this case, the top face shape of the charged raw material M inside the hopper 10 is referred to as a V shape. Alternatively, contrary to what is shown in the figure, the raw material M may be charged so that the widthwise middle section may form a convex hill while each of both widthwise outer sections forms a concave shaped valley. In this case, the shape of the top face of the raw material M charged inside the hopper 10 is referred to as an inverted V shape.

In the top face shape as the V shape, a relatively large amount of the raw material M having a larger particle-size is gathered in the middle section in the widthwise direction. The deeper the depth of the valley, the greater an extent at which a relatively large amount of the raw material M having a larger particle-size is gathered in the middle section in the widthwise direction. In this connection, a depth of the valley is defined as (height H2 of the hill - height H1 of the valley).

To the contrary, in the case when the top face shape as the inverted V shape occurs, a relatively large number of the raw material M having a larger particle-size is gathered in each of both widthwise outer sections. In the widthwise middle section, there is a relatively large amount of the raw-material M with small particle-sizes. In this connection, the deeper the depth of the valley of the top face of the inverted V shape, the greater an extent at which the relatively large number of the raw material M having a larger particle-size is gathered in each of both widthwise outer sections.

This is because coarse particles flows due to the physical properties of the particles of the raw material M, such as the angle of repose, the coefficient of restitution, the coefficient of static friction, and the rolling friction coefficient, such that the particle size-based segregation occurs in the widthwise manner. In other words, this is because the raw material M having the large particle size tends to roll off from the hill towards the valley, while the small particle-sized raw material M remains on the hill or rolls only a short distance from the hill toward the valley and then tends to remain at the position corresponding to the short distance.

Using this principle, the present approach may control the widthwise particle-size based segregation of the raw material M in the hopper 10. This may lead to the adjustment of the widthwise particle-size based segregation of the raw-material layer charged to the vehicle 60. That is, the raw material M may be charged to the vehicle 60 in the widthwise particle-size based segregated manner in the hopper 10. During the charge of the raw material, the feeder 20, gate 30 and chute 40 cannot control the widthwise particle-size based segregation of the raw material. As a result, the widthwise particle-size based segregation of the raw-material layer may be controlled by adjusting the widthwise particle-size based segregation in the hopper 10.

For example, when the widthwise reciprocating speed of the reciprocator 920 and the feed amount and feed rate of the conveyor 910 are adjusted so that the raw material M charged in the hopper 10 has a top face shape of the V shape, the raw material M of the relatively large particle-size is charged to the middle section c in the widthwise-divided sections of the raw-material layer, while the relatively small particle-sized raw material M is charged to each of both outer sections e. In this connection, the larger the depth of the valley, the larger the particle size difference between the particle-size based segregated particles in the widthwise-divided sections. The smaller the depth of the valley, the smaller the particle size difference between the particle-size based segregated particles in the widthwise-divided sections.

To the contrary, when the widthwise reciprocating speed of the reciprocator 920 and the feed amount and feed rate of the conveyor 910 are adjusted so that the raw material M charged in the hopper 10 has the top face shape of the reverse V shape, the raw material M with a relatively small particle-size is charged to the widthwise middle section c of the raw-material layer while the relatively large particle-sized raw material M is charged to each of the both outer sections e. In this connection, the larger the depth of the valley, the larger the particle size difference between the particle-size based segregated particles in the widthwise-divided sections. The smaller the depth of the valley, the smaller the particle size difference between the particle-size based segregated particles in the widthwise-divided sections.

Using this principle, when a plurality of valleys and hills are formed at desired positions within the hopper 10, the particle size-based segregation of the particles of the raw-material layer may be controlled between the widthwise width sections in a targeted manner.

The manner of operation of the charger 900 as described above may be controlled by the widthwise charging controller 800. The widthwise charging controller 800 can control the operation of the charger 900 such that the permeability is uniform in a widthwise manner of the raw-material layer based on the widthwise-divided section-based permeability difference of the raw-material layer. The operation pattern of the charger 900 for this purpose may vary. The operation pattern of the charger 900 may be defined differently depending on the process conditions such as a hopper size, a raw material charge amount, and a vehicle travel speed for each sintered ore production process.

In a following description, a method of controlling the widthwise particle-size based segregation of the raw-material layer by the charger 900 is described when the permeability value measured by the permeability measuring apparatus 700 installed in the widthwise middle section c is relatively small, while the permeability measured by the permeability measuring apparatus 700 installed in each of both widthwise outer sections e is relatively large.

The widthwise charging controller 800 controls the charger 900 to adjust the feed amount of the raw material, the feed rate of the raw material, and the widthwise drop position of the raw material in various patterns such that a large particle-sized raw material is charged to the widthwise middle section in the hopper 10 and a small particle-sized raw material is charged to each of both widthwise outer sections. As the deviation between the permeability values in the sections is larger, the raw material is charged such that the particle size difference is larger in the widthwise particle-size based segregation. As the deviation between the permeability values in the sections is smaller, the raw material is charged such that the particle size difference is smaller in the widthwise particle-size based segregation. Thus, when the particle-size based segregation of the raw material is adjusted in a widthwise manner within the hopper 10, the particle-size variation may occur in the widthwise manner as the raw material is dispensed from the hopper 10 and is charged to the vehicle 60. Thus, the widthwise particle-size based segregation of the raw-material layer may be adjusted in the vehicle 60. For example, a raw material with a relatively large particle-size is charged in the widthwise middle section c of the raw-material layer, while a raw material of a relatively small particle-size is charged to each of both widthwise outer sections e of the raw-material layer.

This increases the permeability in the raw-material layer in the widthwise middle section c, and reduces the permeability in the raw-material layer in each of both widthwise outer sections e. In this manner, the permeability may be uniformly distributed in a widthwise manner of the raw-material layer. As a result, the gas being sucked inside the raw-material layer is sucked uniformly downwardly between all positions in the widthwise direction of the raw-material layer, so that the propagation of the flame may be made uniform in a widthwise manner.

In one example, while real-time controlling the widthwise particle-size based segregation of the raw-material layer while performing the process, the widthwise particle-size based segregated state of the raw-material layer may be reversed. Hereinafter, a method of controlling the widthwise particle-size based segregation of the raw-material layer by the charger 900 is described when the permeability value measured by the permeability measuring apparatus 700 installed in the widthwise middle section c is relatively large, while the permeability measured by the permeability measuring apparatus 700 installed in each of both widthwise outer sections e is relatively small.

The widthwise charging controller 800 controls the charger 900 to adjust the feed amount of the raw material, the feed rate of the raw material, and the widthwise drop position of the raw material in various patterns such that a small particle-sized raw material is charged to the widthwise middle section c in the hopper 10 and a large particle-sized raw material is charged to each of both widthwise outer sections e. As the deviation between the permeability values in the sections is larger, the raw material is charged such that the particle size difference is larger in the widthwise particle-size based segregation. As the deviation between the permeability values in the sections is smaller, the raw material is charged such that the particle size difference is smaller in the widthwise particle-size based segregation.

Thus, when the particle-size based segregation of the raw material is adjusted in a widthwise manner within the hopper 10, the particle-size variation may occur in the widthwise manner as the raw material is dispensed from the hopper 10 and is charged to the vehicle 60. Thus, the widthwise particle-size based segregation of the raw-material layer may be adjusted in the vehicle 60. For example, a raw material with a relatively small particle-size is charged in the widthwise middle section c of the raw-material layer, while a raw material of a relatively large particle-size is charged to each of both widthwise outer sections e of the raw-material layer.

This decreases the permeability in the raw-material layer in the widthwise middle section c, and increases the permeability in the raw-material layer in each of both widthwise outer sections e. In this manner, the permeability may be uniformly distributed in a widthwise manner of the raw-material layer. As a result, the gas being sucked inside the raw-material layer is sucked uniformly downwardly between all positions in the widthwise direction of the raw-material layer, so that the propagation of the flame may be made uniform in a widthwise manner.

Thus, when the flow rate of the gas passing through the raw-material layer in each of the both widthwise outer sections e is relatively lower or higher than the flow rate of gas passing through the raw-material layer in the widthwise middle section c, the controller 800 may control the charger 900 to control the widthwise particle-size based segregation of the raw-material layer by segregating the widthwise particle-sizes of the raw material into the hopper 10.

As a result, the flow rate of the gas passing through the raw-material layer becomes uniform in a widthwise manner, so that the propagation of the flame may be uniform in a widthwise manner. Thus, a uniform thermal energy distribution in a widthwise manner may be achieved inside the raw-material layer. As a result, the recovery rate and productivity of the sintered ore are improved, and the strength deviation is reduced and the quality of the sintered ore is improved.

During this process, it may be difficult to measure the widthwise particle-size based segregation of the raw material in the hopper 10 using optical or mechanical instruments due to moisture evaporation and dust scattering within the hopper 10. In this connection, the widthwise particle-size based segregation of the raw material in the hopper 10 may be estimated in real time using the permeability value based on the widthwise position or section of the raw-material layer as measured by the permeability measuring apparatus 700. For example, a change in the widthwise particle-size based segregation of the raw material in the hopper 10 is predicted from the change in the permeability value based on the widthwise position or section of the raw-material layer as measured by the permeability measuring apparatus. Thus, the widthwise particle-size based segregation of the raw material in hopper 10 may be predicted in real time.

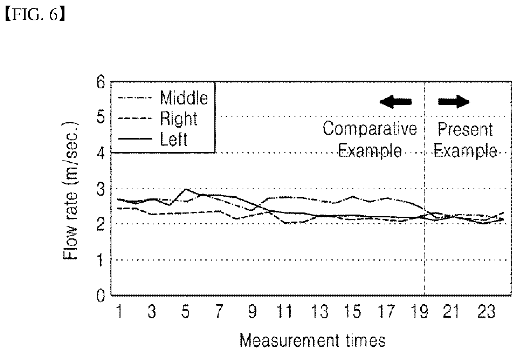

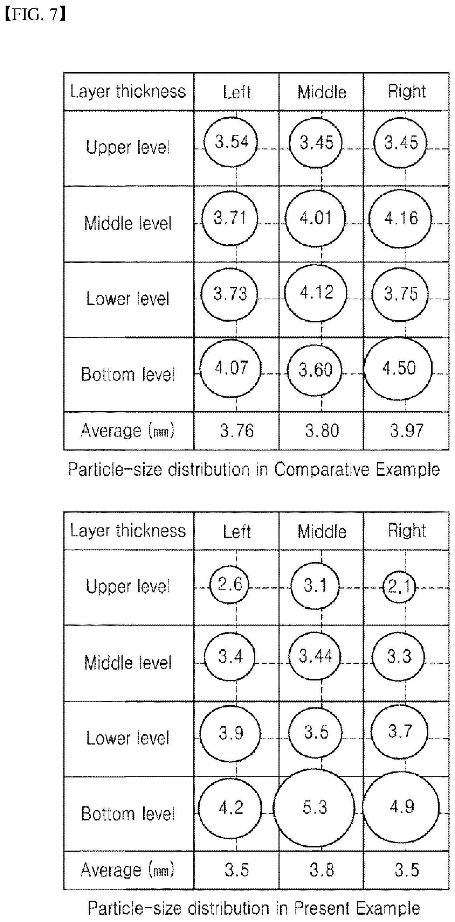

FIG. 6 is a graph comparing the permeability measurement results according to the Comparative Example and Present Example of the present disclosure. FIG. 7 is a graph comparing actual measurements of the particle-size based segregation of the sintered ore according to the Comparative Example and the Present Example of the present disclosure.

To compare the permeability measurement results according to the Comparative Example and the Present Example of the present disclosure, the permeability measuring apparatus according to the above embodiment of the present disclosure was prepared. Then, flow rate values in the widthwise middle section and outer sections in the vehicle were measured by the permeability measuring apparatus while performing a sintered ore production process using a sintering apparatus having a display region of an area 450 m².

In the comparative example, the process was performed without adjusting the widthwise particle-size deviation of the raw-material layer. In this case, the graph shows that the flow rates are different in the sections in the vehicle.

In the case of the Present Example of the present disclosure, the permeabilities are calculated from the measured flow rate values and are transmitted to the widthwise charging controller 800. Using the deviation between the values, the widthwise charging controller 800 controls the operation of the charger 900, such that the charger 900 controls the particle-sizes to be segregated between an outer section near the side wall and a middle section in the vehicle and charges the raw material into the hopper 10. As a result, in this case, the graph shows that the flow rate difference between the sections in the vehicle is significantly reduced.

Then, in the sintered ore production process of the comparative example, the raw material layer charged in the vehicle was sampled for particle-size analysis. In the sintered ore production process of the Present Example of the present disclosure, the raw-material layer charged in the vehicle was sampled for particle-size analysis. Unlike the case of the comparative example, as shown in FIG. 7, in the Present Example, the particle-size based segregation is performed so that the particle-size in the middle section in the vehicle is larger than the particle-size in the left and right outer sections in the vehicle. That is, when the particle-size based segregation is adjusted so that the particle-size in the middle section of the vehicle is larger than the particle-size in the left and right outer sections therein. The difference in flow rate between the sections in the vehicle is significantly reduced in the Present Example.

Further, it was confirmed that the recovery rate of the sintered ore in the sintered ore production process of the Present Example was increased by more than 1.0% than that of the sintered ore production process in the comparative example.

As described above, in the embodiments of the present disclosure, the section-based permeabilities of the raw-material layer may be adjusted to be uniform in a widthwise manner while continuously measuring precisely he section-based permeabilities of the raw-material layer. More specifically, using the permeability measuring apparatus capable of measuring the permeability of the raw-material layer in real time, the charger and the widthwise charging controller capable of adjusting the widthwise particle-size based segregation of the raw-material layer, the flow rate of the gas sucked downward in the the raw-material layer may be measured, and the widthwise particle-size based segregation of the raw-material layer may be controlled so that the flow rates are uniform in a widthwise manner. As a result, the recovery rate of the sintered ore can be increased, and the strength deviation thereof can be reduced.

The embodiments of the present disclosure is set forth for the explanation of the present disclosure and is not set forth for the limitation of the present disclosure. Further, the configurations and modes presented in the above embodiments of the present disclosure will be modified in various ways. It should be noted that these variations may be seen in the category of the present disclosure. In other words, the present disclosure will be implemented in a variety of different forms within the scope of claims and equivalents. It will be understood by those skilled in the art that the present disclosure is susceptible to various modifications within the scope and spirit of the present disclosure.

## Claims

1. A permeability measuring apparatus comprising:
a plurality of rollers spaced apart from each other in a direction of movement of a treated material and disposed above the treated material;
a plurality of rotatable bodies, each rotatable body being mounted on an end of one roller and an end of the other roller to connect the roller to the other roller;
a flange installed to seal a top face of a space defined by the plurality of rollers and the plurality of rotatable bodies;
a hollow tube extending upwardly from and through the flange; and
a flow rate sensor mounted on the hollow tube.

2. The permeability measuring apparatus of claim 1, wherein each rotatable body includes:
a plurality of wheels spaced apart from each other in the direction of movement of the treated material and aligned respectively with one roller and the other roller;
a belt rotatably mounted on and around the plurality of wheels; and
a side plate installed on an inner face of the belt to seal an inner space in the belt.

3. The permeability measuring apparatus of claim 2, wherein the side plate is spaced apart from the plurality of wheels and contacts the inner face of the belt.

4. The permeability measuring apparatus of claim 2, wherein each rotatable body further includes a slit formed concavely in the inner face of the belt, wherein the side plate is inserted into the slit.

5. The permeability measuring apparatus of claim 2, wherein both opposed ends of each of one roller and the other roller are in respective contacts with two adjacent belts, wherein an outer circumferential surface of each of one roller and the other roller is in contact with and is flush with an outer circumferential surface of each of the two adjacent belts.

6. The permeability measuring apparatus of claim 2, wherein the flange contacts, at an periphery of a bottom face thereof, with outer circumferential surfaces of the belts and rollers.

7. The permeability measuring apparatus of claim 2, wherein a first channel is defined to have a space defined between the flange, the plurality of rollers and the plurality of rotatable bodies,
wherein the flange, the plurality of rollers and the plurality of rotatable bodies define the top face and side faces of the first channel respectively, wherein a bottom face of the first channel is opened to communicate with the treated material.

8. The permeability measuring apparatus of claim 7, wherein a second channel is defined to an inner space in the hollow tube, wherein the second channel has an outlet communicating with the top face of the first channel.

9. The permeability measuring apparatus of claim 2, wherein the apparatus further includes a support rotatably supporting the plurality of rollers and the plurality of rotatable bodies while passing through the plurality of rollers and the plurality of rotatable bodies in a direction transverse to the direction of movement of the treated material,
wherein the support has a lower portion for supporting the plurality of rollers and the plurality of rotatable bodies to be in contact with the treated material, wherein the support has an upper portion connected to the flange or the hollow tube to support the flange so as to be able to contact the plurality of rollers and the plurality of rotatable bodies.

10. An sintering apparatus comprising:
a vehicle installed to contain a raw material therein, wherein the raw material is treated in the vehicle while the vehicle is traveling; and
a permeability measuring apparatus extending across the travel direction of the vehicle and disposed above the vehicle, wherein the permeability measuring apparatus include a roller and a rotatable body, wherein a channel in communication with the raw-material layer treated inside the vehicle is defined by the roller and rotatable body.

11. The sintering apparatus of claim 10, wherein the permeability measuring apparatus includes:
a flange installed to face the raw material layer;
a hollow tube extending upwardly from and through the flange; and
a flow rate sensor mounted on the hollow tube,
wherein the roller and rotatable body are installed to contact a periphery of a bottom face of the flange, thereby to form the channel.

12. The sintering apparatus of claim 11, wherein the roller includes a plurality of rollers disposed above the vehicle and spaced apart from each other in the travel direction of the vehicle,
wherein the rotatable body includes a plurality of rotatable bodies, wherein each rotatable body is mounted on an end of one roller and an end of the other roller to connect the roller to the other roller,
wherein the flange is installed to seal a top face of a space defined by the plurality of rollers and the plurality of rotatable bodies.

13. The sintering apparatus of claim 12, wherein each rotatable body includes:
a plurality of wheels spaced apart from each other in the direction of movement of the treated material and aligned respectively with one roller and the other roller;
a belt rotatably mounted on and around the plurality of wheels;
a slit formed concavely in an inner face of the belt; and
a side plate inserted into the slit to seal an inner space in the belt.

14. The sintering apparatus of claim 13, wherein the side plate is spaced apart from the plurality of wheels and contacts the inner face of the belt.

15. The sintering apparatus of claim 13, wherein both opposed ends of each of one roller and the other roller are in respective contacts with two adjacent belts, wherein an outer circumferential surface of each of one roller and the other roller is in contact with and is flush with an outer circumferential surface of each of the two adjacent belts,
wherein the flange contacts, at an periphery of a bottom face thereof, with outer circumferential surfaces of the belts and rollers,
wherein a first channel is defined to have a space defined between the flange, the plurality of rollers and the plurality of rotatable bodies.

16. The sintering apparatus of claim 15, wherein the flange, the plurality of rollers and the plurality of rotatable bodies define the top face and side faces of the first channel respectively, wherein a bottom face of the first channel is opened to communicate with the treated material,
wherein a second channel is defined to an inner space in the hollow tube, wherein the second channel has an outlet communicating with the top face of the first channel.

17. The sintering apparatus of claim 13, wherein the permeability measuring apparatus further includes a support rotatably supporting the plurality of rollers and the plurality of rotatable bodies while passing through the plurality of rollers and the plurality of rotatable bodies in a direction transverse to the direction of movement of the treated material,
wherein the support has a lower portion for supporting the plurality of rollers and the plurality of rotatable bodies to be in contact with the treated material, wherein the support has an upper portion connected to the flange or the hollow tube to support the flange so as to be able to contact the plurality of rollers and the plurality of rotatable bodies.

18. The sintering apparatus of claim 10, wherein the permeability measuring apparatus include a plurality of permeability measuring apparatuses respectively arranged in a plurality of sections arranged in a direction transverse to the travel direction of the vehicle,
wherein the sintering apparatus further includes:
a hopper for charging the raw material into the vehicle;
a charger installed to adjust particle-size based segregation of the raw material charged in the hopper in a widthwise manner; and
a widthwise charging controller for:
receiving measurement values input from the permeability measuring apparatuses;
calculating a deviation value between the measurement values; and
controlling the charger based on the deviation value.
